# EUROPÄISCHE PATENTSCHRIFT

(11) **EP 1 479 475 B1**
(45) Veröffentlichungstag und Bekanntmachung des Hinweises auf die Patenterteilung: **19.03.2008**
(21) Anmeldenummer: 03011277.5
(22) Anmeldetag: 17.05.2003
(51) Int. Cl.: B23Q 1/01, B23Q 1/62

(54) **Doppelspindel-Werkzeugmaschine**
Twin spindle machine tool
Machine-outil à double broche

(43) Veröffentlichungstag der Anmeldung: 24.11.2004
(73) Patentinhaber: Cross Hüller GmbH, 71636 Ludwigsburg (DE)
(72) Erfinder: Corbean, Ioan-Mircea, 71672 Marbach (DE); Stengele, Gerald, 71636 Ludwigsburg (DE); Szulyovsky, Istvan, 71642 Ludwigsburg (DE)
(74) Vertreter: Rau, Manfred

(56) Entgegenhaltungen:
- US-A- 5 611 137
- US-A1- 2001 008 862
- PATENT ABSTRACTS OF JAPAN vol. 010, no. 051 (M-457), 28. Februar 1986 (1986-02-28) -& JP 60 201847 A (MITSUBISHI DENKI KK), 12. Oktober 1985 (1985-10-12)

## Beschreibung

Die Erfindung betrifft eine Doppelspindel-Werkzeugmaschine nach dem Oberbegriff des Patentanspruches 1.

Bei derartigen Doppelspindel-Werkzeugmaschinen in sogenannter Box-in-Box-Bauweise sind die Werkzeug-Spindeln auf dem vertikal verfahrbaren y-Schlitten angebracht und ragen in einen entsprechenden Freiraum des rahmenartigen x-Schlittens hinein. Es hat sich gezeigt, dass bei der Bearbeitung von Werkstücken aufgrund der angreifenden Bearbeitungskräfte Verformungen der Schlitten auftreten können.

Aus US 2001/0008862 A1 ist eine Doppelspindel-Werkzeugmaschine nach dem Oberbegriff des Anspruches 1 bekannt, bei der auf einem flachen Untergestell ein horizontal angeordneter x-Schlitten verschiebbar geführt angeordnet ist, dessen Führungsschienen in einer horizontalen Ebene liegen. Auf diesem Schlitten ist in z-Richtung ein in einer Zustellritchtung verschiebbarer Schlitten angeordnet, an dem wiederum ein in vertikaler y-Richtung verschiebbarer Schlitten angeordnet ist. Dieser trägt eine Doppelspindel. Die Ausgestaltung ist außerordentlich aufwändig.

Aus der US 5,611,137 A (entsprechend EP 0 712 683 A2) ist eine Bohr- und Fräsmaschine bekannt, die auf einem Untergestell einen in einer horizontalen Ebene verschiebbaren Schlitten trägt, auf dem ein weiterer in einer um 90° hiergegen gedrehten Koordinatenrichtung ebenfalls horizontal verschiebbarer weiterer Schlitten angeordnet ist. An diesem Schlitten ist ein Vertikal-Schlitten verschiebbar geführt, der eine Spindel für ein Bohr- oder Fräs-Werkzeug trägt. Dieser die Spindel tragende Schlitten ist über drei Schienen an dem horizontal verfahrbaren Schlitten abgestützt, und zwar über zwei seitliche y-Schienen und eine mittlere obere Schiene. Der Zweck dieser mittleren oberen Schiene ist es, den die Werkzeugspindel tragenden Schlitten gegen Verkantungen zu sichern.

Der Erfindung liegt die Aufgabe zugrunde, eine Doppelspindel-Werkzeugmaschine der gattungsgemäßen Art so weiterzubilden, dass die Auswirkungen der angesprochenen Bearbeitungskräfte zumindest weitgehend eliminiert werden.

Diese Aufgabe wird erfindungsgemäß durch die Merkmale im Kennzeichnungsteil des Anspruches 1 gelöst. Dadurch, dass der x-Schlitten eine mittlere y-Strebe aufweist, auf der der y-Schlitten durch zusätzliche mittlere y-Führungs-Wagen abgestützt wird, wird eine außerordentliche Versteifung des durch den x-Schlitten und den y-Schlitten gebildeten Kreuz-Schlitten-Systems erreicht.

Durch die Weiterbildung nach Anspruch 2 wird erreicht, dass auch die mittig vorn y-Schlitten auf den x-Schlitten übertragenen Kräfte direkt durch die mittleren x-Führungs-Wagen auf den Ständer der Werkzeugmaschine übertragen werden.

Durch die erfindungsgemäßen Maßnahmen ist das erwähnte Kreuzschlitten-System so steif, dass gemäß einer vorteilhaften Ausgestaltung auch die Werkzeugspindeln in z-Richtung verschiebbar auf dem y-Schlitten gelagert werden können. In diesem Fall ist die Weiterbildung nach Anspruch 3 von Vorteil.

Weitere Merkmale, Vorteile und Einzelheiten der Erfindung ergeben sich aus der nachfolgenden Beschreibung zweier Ausführungsbeispiele anhand der Zeichnung. Es zeigt
- Fig. 1: eine Teil-Draufsicht auf ein erstes Ausführungsbeispiel einer Doppelspindel-Werkzeugmaschine gemäß dem Sichtpfeil I in Fig. 2,
- Fig. 2: eine Stirnansicht der Werkzeugmaschine entsprechend dem Sichtpfeil II in Fig. 1,
- Fig. 3: eine Teil-Draufsicht auf ein zweites Ausführungsbeispiel einer Doppelspindel-Werkzeugmaschine entsprechend dem Sichtpfeil III in Fig. 4 und
- Fig. 4: eine Stirnansicht der Werkzeugmaschine entsprechend dem Sichtpfeil IV in Fig. 3.

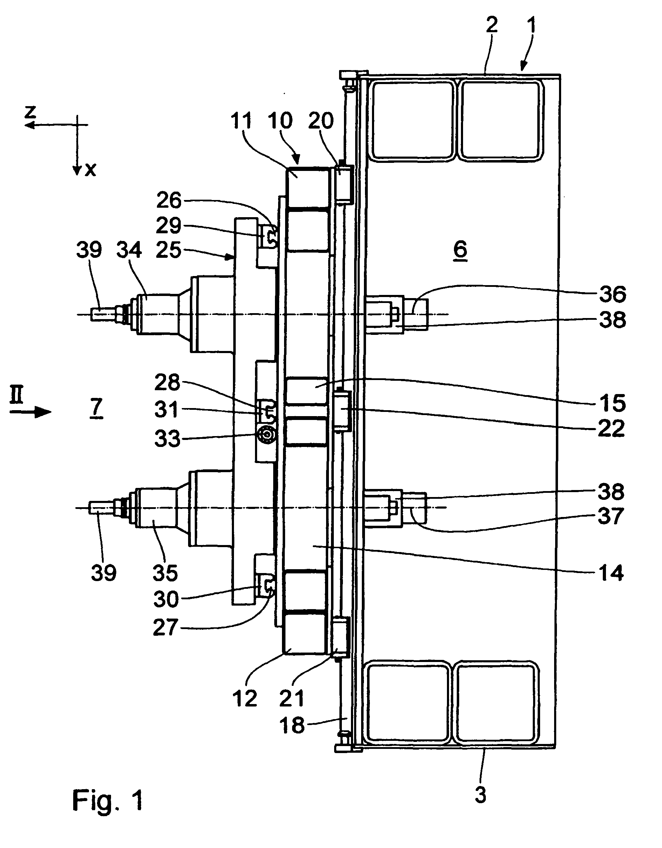

Das in den Fig. 1 bis 2 dargestellte erste Ausführungsbeispiel einer Doppelspindel-Werkzeugmaschine weist einen - in der horizontalen z-Richtung gesehen - rechteckigen, und zwar etwa quadratischen, durch einen Rahmen gebildeten Ständer 1 auf, der durch sich in y-Richtung erstreckende vertikale Seiten-Stützen 2, 3 und jeweils einen diese verbindenden horizontalen, sich in x-Richtung erstreckenden, oberen Quer-Holm 4 bzw. einen unteren Quer-Holm 5 gebildet ist. Die Seiten-Stützen 2, 3 und die Quer-Holme 4, 5 sind durch Hohlprofile gebildet und umschließen einen Innenraum 6, der beidendig offen ist, und zwar insbesondere zum Arbeitsraum 7 hin. Der Ständer 1 ist über ein Untergestell 8 auf einem Fundament bzw. einer Fundament-Platte 9 abgestützt.

An der dem Arbeitsraum 7 zugewandten Stirnseite des Ständers 1 ist ein ebenfalls rahmenartig ausgebildeter x-Schlitten 10 in x-Richtung verschiebbar geführt angeordnet. Der x-Schlitten 10 weist jeweils eine seitliche vertikale y-Strebe 11 bzw. 12 auf, die durch eine obere Quer-Strebe 13 und eine untere Quer-Strebe 14 miteinander verbunden sind. Zwischen den beiden seitlichen y-Streben 11, 12 ist mittig eine mittlere vertikale y-Strebe 15 angebracht, die ebenfalls mit den Quer-Streben 13, 14 verbunden ist. Zwischen einer seitlichen y-Strebe 11 und der mittleren y-Strebe 15 einerseits und der anderen seitlichen y-Strebe 12 und der mittleren y-Strebe 15 andererseits sind zwei Freiräume 16, 17 im x-Schlitten 10 ausgebildet.

Zur Führung des x-Schlittens 10 sind an den Quer-Holmen 4, 5 eine obere x-Führungs-Schiene 18 und eine untere x-Führungs-Schiene 19 angebracht, auf denen der x-Schlitten 10 mittels jeweils dreier x-Führungs-Wagen 20, 21, 22 geführt ist. Ein seitlicher x-Führungs-Wagen 20 ist jeweils am oberen bzw. unteren Ende der seitlichen y-Strebe 11 angeordnet, während ein anderer seitlicher x-Führungs-Wagen 21 am oberen bzw. unteren Ende der anderen seitlichen y-Strebe 12 angeordnet ist. Jeweils ein mittlerer x-Führungs-Wagen ist oberhalb bzw. unterhalb der mittleren y-Strebe 15, also ebenfalls mittig, am x-Schlitten 10 angeordnet.

Der Antrieb des x-Schlittens 10 erfolgt mittels eines auf dem x-Schlitten 10 angebrachten x-Motors 23 über eine sich in x-Richtung erstreckende, an den Seiten-Stützen 2, 3 des Ständers 1 drehfest gelagerte x-Kugelrollspindel 24 .

Auf der dem Arbeitsraum 7 zugewandten Stirnseite des x-Schlittens 10 ist ein in y-Richtung, also vertikal, verschiebbarer y-Schlitten 25 verschiebbar geführt. Hierzu sind auf den seitlichen y-Streben 11, 12 und der mittleren y-Strebe 15 des x-Schlittens 10 jeweils eine seitliche y-Führungs-Schiene 26 bzw. 27 und eine mittlere y-Führungs-Schiene 28 angebracht, auf denen der y-Schlitten 25 mittels jeweils zwei seitlichen y-Führungs-Wagen 29 bzw. 30 und einem mittleren y-Führungs-Wagen 31 verschiebbar geführt ist. Die jeweils zwei seitlichen y-Führungs-Wagen 29, 30 sind jeweils im oberen bzw. unteren Bereich des y-Schlittens 25 angeordnet, während der eine mittlere y-Führungswagen 31 in der vertikalen Mitte angeordnet ist, da die mittlere y-Führungs-Schiene 28 kürzer als die seitlichen y-Führungs-Schienen 26, 27 ist.

Der Antrieb des y-Schlittens 25 erfolgt mittels eines auf dem x-Schlitten 10 angebrachten y-Motors 32 über eine y-Kugelrollspindel 33.

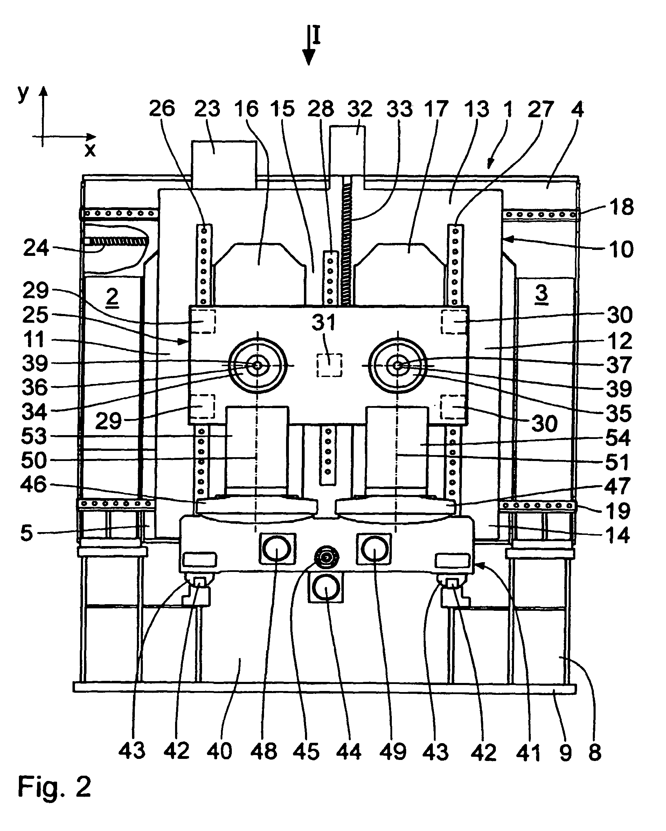

Auf dem y-Schlitten 25 befinden sich im Abstand voneinander zwei Werkzeugspindeln 34, 35, die sich in z-Richtung erstrecken und nach vorn zum Arbeitsraum 7 und nach hinten durch jeweils einen Freiraum 16 bzw. 17 des x-Schlittens 10 in den Innenraum 6 des Ständers 1 ragen. Eine Werkzeugspindel 34 ist also mittig zwischen einer seitlichen y-Strebe 11 und der mittleren y-Strebe 15 des x-Schlittens 10 angeordnet, während die andere Werkzeugspindel 35 mittig zwischen der mittleren y-Strebe 15 und der anderen seitlichen y-Strebe 1 angeordnet ist. Die beiden Werkzeugspindeln 34, 35 sind also spiegelsymmetrisch zur mittleren y-Führungs-Schiene 28 angeordnet.
Die Werkzeugspindeln 34, 35 sind jeweils um eine sich in z-Richtung erstreckende Achse 36, 37 mittels jeweils eines Antriebsmotors 38 antreibbar. Die Werkzeugspindeln 34, 35 können an ihrer dem Arbeitsraum zugewandten Seite jeweils ein spanendes Werkzeug 39 aufnehmen. Die Werkzeugspindeln 34, 35 sind in x- und y-Richtung relativ zueinander ortsfest auf dem y-Schlitten 25 angebracht und beim Ausführungsbeispiel nach den Fig. 1 und 2 in z-Richtung unverschiebbar ausgebildet.

Im Arbeitsraum 7 ist vor dem Ständer 1 auf der Fundament-Platte 9 ein Werkstück-Träger-Bett 40 gelagert, auf dem ein z-Schlitten 41 in z-Richtung verschiebbar gelagert ist. Hierzu sind auf dem Bett 40 z-Führungs-Schienen 42 angebracht, auf denen der z-Schlitten 41 mittels z-Führungs-Wagen 43 verschiebbar abgestützt ist. Der Antrieb erfolgt mittels eines am Werkstück-Träger-Bett 40 angebrachten z-Motors 44 über eine z-Kugelrollspindel 45.

Auf dem z-Schlitten 41 sind zwei y-Drehtische 46, 47 angebracht, die mittels jeweils eines am z-Schlitten 41 angebrachten Dreh-Antriebsmotors 48, 49 um eine vertikale, also in y-Richtung verlaufende, y-Drehachse 50, 51 drehantreibbar sind. Auf den y-Drehtischen 46, 47 ist jeweils ein Werkstück-Träger 53, 54 angebracht, der ein zu bearbeitendes Werkstück aufnehmen kann.

Die gleichzeitige Bearbeitung von grundsätzlich identischen Werkstücken mittels je eines Werkzeugs 30 erfolgt in der Weise, dass sie in x- und y-Richtung jeweils identische Bewegungen ausführen. Die Werkstücke führen in z-Richtung ebenfalls identische Bewegungen aus.

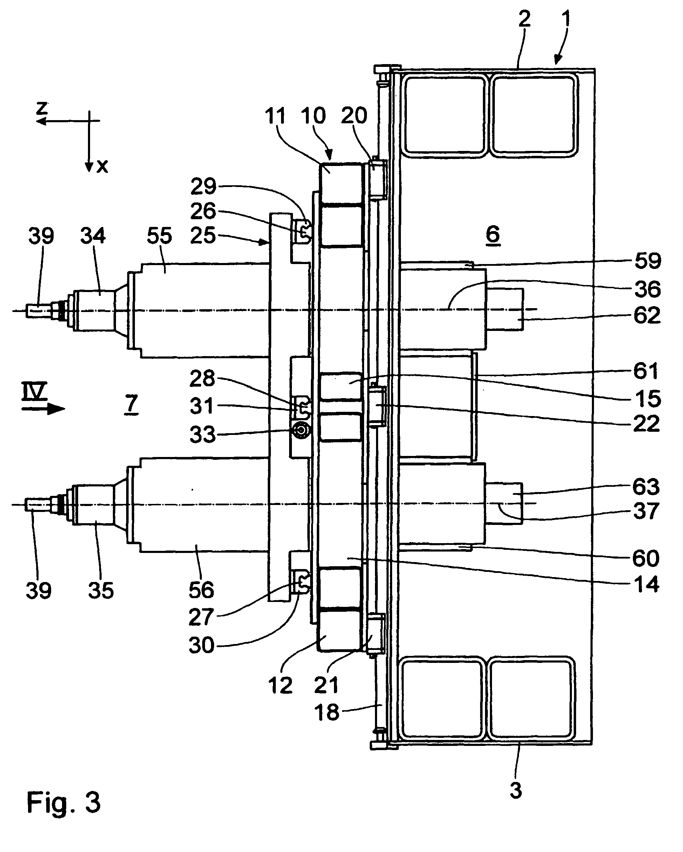

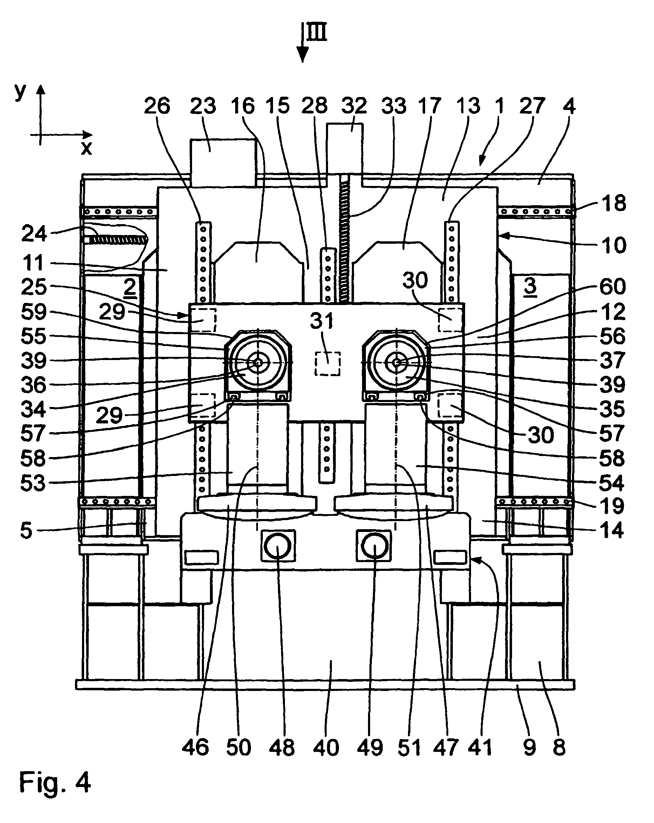

Das Ausführungsbeispiel nach den Fig. 3 und 4 unterscheidet sich von dem nach den Fig. 1 und 2 nur dadurch, dass die Werkzeugspindeln 34, 35 in z-Richtung verschiebbar auf dem y-Schlitten 25 geführt sind, während die Werkstück-Träger 53, 54 in z-Richtung unverschiebbar ausgebildet sind.

Die Werkzeugspindeln 34, 35 sind Teil sie weitgehend einhüllender Pinolen 55, 56. Diese Pinolen 55, 56 sind mittels z-Führungs-Wagen 57 auf z-Führungs-Schienen 58 abgestützt, die in jeweils einem Werkzeugspindel-Träger 59, 60 angeordnet sind. Diese Werkzeugspindel-Träger 59, 60 ragen vom y-Schlitten 25 wie Ausleger in den Innenraum 6 des Ständers 1. Sie sind dort mittels einer Versteifung 61 miteinander verbunden. An den Werkzeug-Spindel-Trägern 59, 60 sind z-Motoren 62, 63 angebracht, mittels derer die die Werkzeugspindeln 34, 35 beinhaltenden Pinolen 55, 56 in z-Richtung angetrieben werden.

## Patentansprüche

1. Doppelspindel-Werkzeugmaschine,
- mit einem rahmenartigen Ständer (1),
- mit einem am Ständer (1) in einer x-Richtung verschiebbar geführten, rahmenartigen x-Schlitten (10),
- mit einem am x-Schlitten (10) in einer y-Richtung verschiebbaren y-Schlitten (25),
- mit zwei auf dem y-Schlitten (25) angeordneten Werkzeugspindeln (34, 35) zur Aufnahme von Werkzeugen (39) zur Bearbeitung von in einem Arbeitsraum (7) befindlichen Werkstücken und
- mit mindestens einem im Arbeitsraum (7) angeordneten Werkstück-Träger (53, 54) zur Aufnahme der Werkstücke,
**dadurch gekennzeichnet,**
**dass** der rahmenartige Ständer (1) durch sich in vertikaler y-Richtung erstreckende Seiten-Stützen (2, 3) und einen oberen und einen unteren sich jeweils in horizontaler x-Richtung erstreckenden Quer-Holm (4, 5) gebildet ist und zwischen den Seiten-Stützen (2, 3) und den Quer-Holmen (4, 5) einen Innenraum (6) umschließt,
**dass** der x-Schlitten (10) je eine seitliche y-Strebe (11, 12) und mittig zwischen diesen eine mittlere y-Strebe (15) aufweist, wobei zwischen jeweils einer seitlichen y-Strebe (11, 12) und der mittleren y-Strebe (15) ein Freiraum (16, 17) ausgebildet ist,
**dass** auf den seitlichen y-Streben (11, 12) je eine seitliche y-Führungs-Schiene (26, 27) und auf der mittleren y-Strebe (15) eine mittlere y-Führungs-Schiene (28) angebracht sind,
**dass** der y-Schlitten (25) auf den seitlichen y-Führungs-Schienen (26, 27) mittels je mindestens zwei seitlichen y-Führungs-Wagen (29, 30) und auf der mittleren y-Fühnmgs-Schiene (28) mittels mindestens einem mittleren y-FOhrungs-Wagen (31) geführt ist und
**dass** je eine Werkzeugspindel (34, 35) je einen Freiraum (16, 17) durchsetzt und in den Innenraum (6) des Ständers (1) ragt.

2. Doppelspindel-Werkzeugmaschine nach Anspruch 1, **dadurch gekennzeichnet,**
**dass** am Ständer (1) eine obere und eine untere x-Führungs-Schiene (18, 19) angebracht sind und
**dass** der x-Schlitten (10) auf den x-Fuhrungs-Schienen (18, 19) mittels je zwei seitlichen x-Führungs-Wagen (20, 21) und mittels je eines mittleren x-Führungs-Wagens (22) geführt ist.

3. Doppelspindel-Werkzeugmaschine nach Anspruch 1 oder 2, **dadurch gekennzeichnet,**
**dass** die Werkzeugspindeln (34, 35) auf dem y-Schlitten (25) in z-Richtung mittels Werkzeugspindel-Trägem (59, 60) verschiebbar abgestützt sind und
**dass** die Werkzeugspindel-Träger (59, 60) mittels mindestens einer Versteifung (61) miteinander verbunden sind.

## Claims

1. Double-spindle tool machine comprising
- a frame-like stand (1),
- a movable, frame-like x-slide (10) which is guided along the stand (1),
- a y-slide (25) which is displaceable along the x-slide (10) in a y-direction,
- two tool spindles (34, 35) disposed on the y-slide (25) for accommodating tools (39) for machining work pieces situated in a working area (7), and
- at least one work piece carrier (53, 54) disposed in the working area (7) for accommodating the work pieces,
**characterized in**
**that** the frame-like stand (1) is formed by lateral columns (2, 3) extending in a vertical y-direction as well as an upper and a lower transverse bar (4, 5), each of them extending in a horizontal x-direction,
said frame-like stand (1) thus defining an internal space (6) between the lateral columns (2, 3) and the transverse bars (4, 5),
**that** the x-slide (10) is provided with one y-column (11, 12) on either side and a central y-column (15) which is disposed in the middle between them, with a free space (16, 17) formed between each of the lateral y-columns (11, 12) and the central y-column (15),
**that** a lateral y-guide rail (26, 27) is disposed on each of the lateral y-columns (11, 12), and a central y-guide rail (28) is disposed on the central y-column (15),
**that** the y-slide (25) is guided along the lateral y-guide rails (26, 27) by means of at least two guide carriages (29, 30) on either side, and along the central y-guide rail by means of at least one central y-guide carriage (31), and
**that** one work piece spindle (34, 35) each penetrates a free space (16, 17) each, said work piece spindle (34, 35) thus extending into the internal space (6) of the stand (1).

2. Double-spindle tool machine according to claim 1, **characterized in that** the stand (1) is provided with an upper and a lower x-guide rail (18, 19), and
that the x-slide (10) is guided along the x-guide rails (18, 19) by means of two x-guide carriages (20, 21) on either side and by means of one central x-guide carriage (22) each.

3. Double-spindle tool machine according to claim 1 or 2, **characterized in**
**that** the tool spindles (34, 35) are movably supported on the y-slide (25) in the z-direction by means of tool spindle carriers (59, 60), and that the tool spindle carriers (59, 60) are interconnected by means of at least one reinforcement (61).

## Revendications

1. Machine-outil à double broche comprenant,
- un support (1) de type cadre,
- un chariot x (10) de type cadre, guidé de manière mobile sur le support (1) dans une direction x,
- un chariot y (25) pouvant se déplacer sur le chariot x (10) dans une direction y,
- deux broches d'outil (34, 35) disposées sur le chariot y (25) destinées à recevoir des outils (39) afin d'usiner des pièces se trouvant dans un espace de travail (7) et
- au moins un porte-pièces (53, 54) disposé dans l'espace de travail (7) destiné à recevoir les pièces,
**caractérisée en ce que**
le support (1) de type cadre est formé par des appuis latéraux (2, 3) s'étendant dans la direction y verticale et par des traverses (4, 5) supérieures et inférieures s'étendant chacune dans la direction x horizontale et entoure un espace intérieur (6) entre les appuis latéraux (2, 3) et les traverses (4, 5),
le chariot x (10) présente deux contrefiches y latérales (11, 12) et au milieu entre celles-ci, une contrefiche y médiane (15), entre chaque contrefiche y latérale (11, 12) et la contrefiche y médiane (15) étant réalisé un espace libre (16, 17),
sur chaque contrefiche y latérale (11, 12) est monté un rail de guidage y latéral (26, 27) et sur la contrefiche y médiane (15) un rail de guidage y médian (28),
le chariot y (25) est guidé sur les rails de guidage y latéraux (26, 27) au moyen d'au moins deux chariots de guidage y latéraux (29, 30) et sur le rail de guidage y médian (28) au moyen d'au moins un chariot de guidage y médian (31) et
une broche d'outil (34, 35) traverse un espace libre (16, 17) et pénètre dans l'espace intérieur(6) du support (1).

2. Machine-outil à double broche selon la revendication 1, **caractérisée en ce que**
sur le support (1) sont montés des rails de guidage x (18, 19) supérieurs et inférieurs, et
**en ce que** le chariot x (10) est guidé sur les rails de guidage x (18, 19) au moyen de deux chariots de guidage x latéraux (20, 21) et au moyen d'un chariot de guidage x médian (22).

3. Machine-outil à double broche selon la revendication 1 ou 2, **caractérisée en ce**
**que** les broches d'outil (34, 35) sont en appui de manière mobile sur le chariot y (25) dans la direction z au moyen de porte-broches d'outil (59, 60) et
en ce que les porte-broches d'outil (59, 60) sont reliés entre eux au moyen d'au moins un renforcement (61).
